# EUROPEAN PATENT APPLICATION

(11) **EP 1 785 879 A1**
(43) Date of publication of application: **16.05.2007**
(21) Application number: 05780838.8
(22) Date of filing: 23.08.2005
(51) Int. Cl.: G06F 12/14, G06F 15/00, G11B 20/10, H04N 7/173

(54) **CONTENTS MANAGEMENT METHOD, AND CONTENTS DISTRIBUTION METHOD**

(30) Priority: 30.08.2004 JP 2004250292
(71) Applicant: IntelligentDisc, Inc., Yokohama-shi, Kanagawa 222-0033 (JP)
(72) Inventor: SHIGETOMI, T. c/o IntelligentDisc, Inc.,, Yokohama-shi, Kanagawa 222-0033 (JP); KARIMOTO, Hiroyasu, c/o IntelligentDisc, Inc.,, Yokohama-shi, Kanagawa 222-0033 (JP)
(74) Representative: Vossius & Partner
(86) International application number: PCT/JP2005/015608
(87) International publication number: WO 2006/025291

(57) **Abstract**

It is the object of the present invention to provide a contents management method and a contents distribution method that are capable of preventing complete copying of contents to protect the copyright for the contents.

Contents data is constituted of at least two sets of data. One of the two sets of data is stored on a disk, while the other of the two sets is stored on a memory provided in a server side that is connected via a network. When reproducing the disk, the two sets of data are acquired to reproduce the contents data.

## Description

### FIELD OF THE INVENTION

The present invention relates to a contents management method that prevents illegal copying of contents distributed via a network to gain appropriate protection of the contents, and a contents distribution method that distributes contents via a network.

### DESCRIPTION OF THE RELATED ART

With the advent of large capacity storage media such as a compact disk (CD), a digital video disk (DVD), etc., it is becoming standard to store contents data, such as music, a movie, and game software, on these storage media. In CDs and DVDs, music and video have been recorded in special formats, so even if simple data copying is performed with a computer or the like, music and video cannot be reproduced from the copied data.

On the other hand, in the case where contents data stored on these storage media has not been subjected to special format processing such as that described above, the contents data can be copied without any restriction unless provided with particular authentication means. This has become a big problem from the viewpoint of copyright management.

In addition, even if special format processing is performed on contents data, the data is not totally secure from being copied. That is, at present, there are being used many drive units that are capable of writing data to storage media of various kinds such as CD-R (recordable), CD-RW (rewritable), DVD-R, DVD-RW, DVD-RAM (random access memory), etc. The use of special software also makes it possible to illegally copy disk data, such as CD data, DVD data, etc., into a similar storage medium, and illegally copied disk data can be reproduced with a general-purpose reproducer.

To prevent such illegal disk copying, there have been proposed various techniques, such as encryption, insertion of a copy protect or authentication signal, an error correcting method, etc. For instance, they are disclosed in Patent Documents 1 through 4.
[Patent Document 1] Japanese Patent Laid-Open Publication No. 2002-92894
[Patent Document 2] Japanese Patent Laid-Open Publication No. 2004-46859
[Patent Document 3] Japanese Patent Laid-Open Publication No. 2003-77218
[Patent Document 4] Japanese Patent Laid-Open Publication No. 2004-127448

In addition, the market for a contents distribution service such as receiving distribution of contents by downloading music or video via a broadband network is remarkably expanding in recent years, and its further expandability is considered to be sure.

In this kind of contents distribution service, fee-charging contents data is distributed in scrambled form, and subscribers use a descrambling device to obtain clear contents data.

### DISCLOSURE OF THE INVENTION

However, in the technique for inserting a copy protect or authentication signal, special signal processing for protection is required, or authentication activities become necessary. In addition, decoding information becomes necessary to decode a ciphered signal, so the system becomes complicated. The error correcting method is not a technique that guarantees reliability and safety.

In the above technique, in which contents data is distributed in scrambled form and subscribers use a descrambling device to obtain clear contents data, if the descrambling process is broken by hacking, all of the contents data will be illegally copied, and consequently, copyright infringement will be easily performed.

Considering that the distribution of contents data through networks will become the mainstream in future, even if contents holders such as a Hollywood contents holder distribute contents data in strong cipher through a network, an infringement of a copyright will be immeasurable if the cipher is decoded.

Accordingly, it is an object of the present invention to provide a contents management method that is capable of preventing complete copying of contents to protect the copyright for the contents.

Another object of the present invention is to provide a contents distribution method that is capable of preventing complete copying of contents to protect the copyright for the contents.

In order to solve the above problems, contents management method and contents distribution method according to the present invention employs the following featured structures.
(1) A contents management method comprising the steps of:
   preparing contents data constituted of at least two sets of data;
   storing one of said two sets of data on a disk and storing the other of said two set of data on a memory provided in a server side that is connected via a network; and
   when reproducing said disk, reproducing said contents data by acquiring said at least two sets of data.
(2) The contents management method as set forth in claim 1, wherein, when reproducing said disk, by accessing said server side based on information stored on said disk and reading out said other set of data, said contents data is reproduced.
(3) A contents management method comprising the steps of:
   preparing contents data constituted of at least first, second, and third sets of data;
   storing said first set of data on a disk, storing said second set of data on a memory of an electronic circuit mounted on said disk, and storing said third set of data on a memory provided in a server side that is connected via a network; and
   when reproducing said disk, reproducing said contents data by acquiring said second set of data and said third sets of data.
(4) The contents management method as set forth in claim 3, wherein, when reproducing said disk, by reading out said second set of data stored on the memory of the electronic circuit mounted on said disk, and by accessing said server side based on information stored on said disk and reading out said third set of data, said contents data is reproduced.
(5) The contents management method as set forth in claim 3 or 4, wherein the data stored on said server side is scrambled.
(6) The contents management method as set forth in any of claims 1 through 5, wherein
   the memory of said electronic circuit stores a code for specifying a particular user or store that handles said disk;
   when reproducing said disk, the code stored on said memory is compared with a code previously set at a reproducing side; and
   only when both codes are the same, reproduction is made possible.
(7) The contents management method as set forth in any of claims 1 through 6, wherein
   ID information stored on said disk is compared with ID information stored on said electronic circuit; and
   only when both are the same, reproduction of said disk is made possible.
(8) The contents management method as set forth in any of claims 1 through 7, wherein
   ID information previously given to said third set of data is compared with ID information stored on said electronic circuit; and
   only when both are the same, reproduction of said disk is made possible.
(9) The contents management method as set forth in any of claims 1 through 8, wherein
   at the time of said reproduction, a disk reproducing side is connected to a server through a network; and
   said server side manages said code received from said disk reproducing side.
(10) The contents management method as set forth in claim 9, wherein, when said code is duplicated, said code stored on the memory of the electronic circuit of said disk is deleted.
(11) The contents management method as set forth in any of claims 1 through 10, wherein data of the part of said third set of data that corresponds to at least either said first set of data or said second set of data is recorded as noise data.
(12) The contents management method as set forth in any of claims 1 through 11, wherein said electronic circuit comprises a radio frequency identification (RF-ID) section.
(13) The contents management method as set forth in any of claims 1 through 12, wherein said disk reproducing side is provided with an authentication device which only particular users can use.
(14) The contents management method as set forth in any of claims 1 through 13, wherein said authentication device comprises a living body authentication device.
(15) The contents management method as set forth in any of claims 1 through 14, wherein said disk comprises an optical disk.
(16) A contents distribution method based on an on-demand video distribution service, comprising the steps of:
   dividing contents data into at least two sets of data;
   storing one of said two sets of data on a disk and storing the other of said two sets of data on a memory provided in a server side that is connected via a network;
   when reproducing said contents, reading out said one set of data from said disk and receiving distribution of said other set of data from the memory provided in said server side; and
   reproducing said contents data based on said two sets of data obtained.
(17) A contents distribution method based on an on-demand video distribution service, comprising the steps of:
   dividing contents data into first, second, and third sets of data;
   storing said first set of data on a disk, storing said second set of data an electronic circuit mounted on said disk, and storing said third set of data on a memory provided in a server side that is connected via a network;
   when reproducing said contents, reading out said first and second sets of data from said disk and receiving distribution of said third set of data from the memory provided in said server side; and
   reproducing said contents data based on said first, second, and third sets of data.
(18) The contents distribution method as set forth in claim 16 or 17, wherein
   said disk stores a plurality of titles each containing only the best part of said contents data previously determined; and
   at the time of reproduction, a preset Web site is accessed with said disk to receive distribution of corresponding contents data.
(19) The contents distribution method as set forth in claim 17 or 18, wherein said first and second sets of data are assigned predetermined particular data of said contents data.
(20) The contents distribution method as set forth in claim 16, wherein data of the part of said other set of data that corresponds to said one set of data is noise data.
(21) The contents distribution method as set forth in any of claims 17 through 19, wherein data of the part of said third set of data that corresponds to at least either said first set of data or said second set of data is noise data.
(22) A contents distribution method of distributing contents data from a provider via a network, comprising the steps of:
   dividing said contents data into at least two sets of data;
   storing one of said two sets of data on a disk and storing the other of said two sets of data on a memory provided in a server side that is connected via a network; and
   when reproducing said disk, joining said one set of data to said other set of data acquired via said network to reproduce said contents data.
(23) A contents distribution method of distributing contents data from a provider via a network, comprising the steps of:
   dividing said contents data into at least three sets of data;
   storing said first set of data on a disk, storing said second set of data on an electronic circuit mounted on said disk, and storing said third set of data on a memory provided in a server side that is connected via a network ; and
   when reproducing said disk, acquiring said first and second sets of data, and joining said first and second sets of data to said third set of data acquired via said network to reproduce said contents data.
(24) The contents distribution method as set forth in claim 22, wherein said one set of data contains data equivalent to the predetermined best part of said content data.
(25) The contents distribution method as set forth in claim 23, wherein said one set of data contains data equivalent to the predetermined best part of said content data.
(26) The contents distribution method as set forth in any of claims 22 through 25, wherein, based on an address of a distribution source stored on said disk, said disk is connected to said distribution source via a network so that said other set of data or said third set of data is downloaded.
(27) The contents distribution method as set forth in any of claims 16 through 26, wherein said disk comprises an optical disk

### ADVANTAGES OF THE INVENTION

According to the present invention, contents data to be protected is divided into at least two sets of data. One of the two sets of data is stored on a disk, while the other of the two sets is stored on a memory provided in a server side that is connected via a network. When reproducing the disk, the two sets of data are acquired to reproduce the contents data. Contents data that should be protected is also divided into at least first, second, and third sets of data. The first set of data is stored on a disk, the second set of data is stored on an electronic circuit mounted on the disk, and the third set of data is stored on a memory provided in a server side that is connected via a network. When reproducing the disk, the second set of data stored on the electronic circuit mounted on the disk is read out and the server is accessed to read out the third set of data, and based on the first, second, and third sets of data, the contents data is reproduced. Therefore, the present invention is able to have the following advantageous effects:
(1) Even if contents data distributed in scrambled form via a network is hacked, the hacking alone cannot reproduce the contents data completely and therefore complete contents copying is impossible.
(2) At the time of reproducing contents data, only in the case where predetermined conditions are met, all data are joined together so that the original contents data can be reproduced. Thus, simple disk copying can obtain only incomplete contents information, so illegal copying is suppressed.
(3) As predetermined conditions, the following conditions are considered. That is, in a disk and an electronic circuit, a management code (a code, a symbol, a number, etc,) is written to a manager (a store, etc.) handling the disk. At the time of reproduction, only when the management codes of the manager stored on the disk and electronic circuit are the same, the synthesis of the three divided sets of data is made possible, whereby the original contents data can be completely reproduced.
(4) The disk with an electronic circuit mounted thereon can access a target IP address directly without a domain name server (DNS), as a physical passport (because inputting of a password or the like is not needed, security is high and operation is very simple), and on top of that, security for personal information is high.

### BRIEF DESCRIPTION OF THE DRAWINGS

FIG. 1 is a basic system configuration diagram for carrying out a contents management method and a contents distribution method according to the present invention;
FIG. 2 is a diagram showing contents data stored on a rewritable storage section (RAM), contents data stored on the ROM or RAM of an optical disk, and contents data stored on a memory of an electric circuit mounted on an optical disk, according to an embodiment of the present invention;
FIG. 3 is a diagram showing data recorded on the memory of the electronic circuit, data recorded on the optical disk, and data recorded on the rewritable storage section (RAM), according to the above embodiment of the present invention; and
FIG. 4 is a flowchart showing a processing procedure in the above embodiment of the present invention.

### DESCRIPTION OF THE PREFERRED EMBODIMENTS

The configuration and operation of a preferred embodiment of a contents management method and contents distribution method according to the present invention will hereinafter be described in detail with reference to the accompanying drawings.

In the following description, the present invention is applied to an optical disk equipped with an electronic circuit that has a central processing unit (CPU) function and a memory, etc. However, it is needless to say that the present invention is not limited to such an optical disk, but may be applicable to arbitrary disks and storage media. A configuration for carrying out the present invention is not limited to the configuration described below. The present invention can employ an arbitrary well-known configuration, and can adopt configurations capable of achieving the same function.

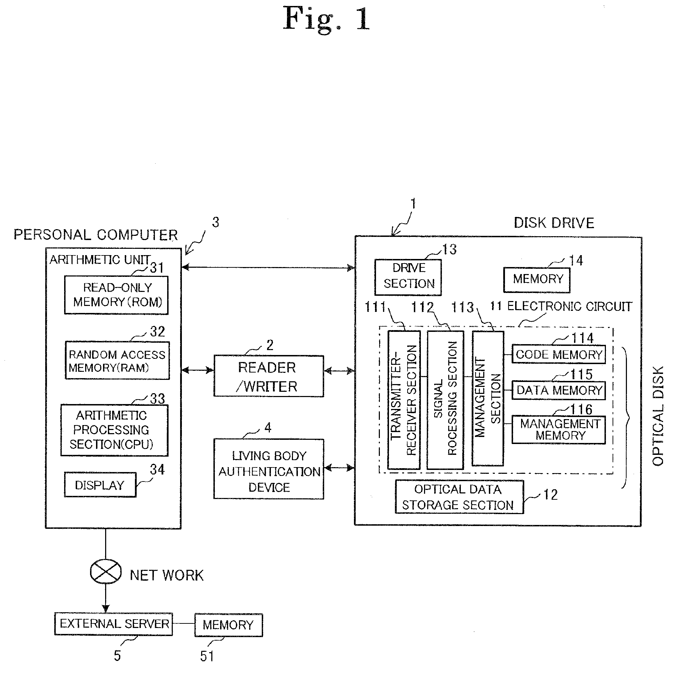

FIG. 1 is a basic system configuration diagram for carrying out a contents management method and a contents distribution method according to the present invention. In this system, a disk drive 1 rotates an optical disk to read out contents data from the optical disk or write data to the optical disk. A data storage section provided on one side of the optical disk is used to store optical data such as contents data, etc. The other side of the optical disk is provided with an electronic circuit (CPU) 11, which carries out predetermined signal processing. The electronic circuit 11 is equipped with a transmitter-receiver section 111, a signal processing section 112, a management section 113, a code memory 114, a data memory 115, and a management memory 116. The processed signals in the electronic circuit 11 and external information, for example, are sent to and received from an external circuit through the transmitter-receiver section (transmitter-receiver circuit) 111 of the disk drive 1 as radio signals.

Referring to FIG. 1, the disk drive 1 is provided with an insertion slot (not shown) into which the optical disk is inserted. The optical disk inserted is rotated at a predetermined speed. When the optical disk is being rotated, laser light is irradiated from an optical pickup toward the optical disk surface, and the reflected light is detected through the optical pickup, whereby optically recorded data is read out. Laser light is also irradiated from the optical pickup to write data.

The disk drive 1 is equipped with a drive section 13 for rotating the optical disk and a memory 14 (which is not necessarily required). One side of the optical disk is equipped with an optical data storage section 12, which has at least either a ROM region, on which music information, video information, program information, and other information are stored, or a RAM region, to which arbitrary data can be written. The other side of the optical disk is equipped with the electronic circuit 11 that has a CPU function. The electronic circuit 11, for example, can be formed as a radio frequency identification (RF-ID) section. Of course, the electronic circuit 11 can also be provided on the above-described one side.

The RF-ID section generally makes possible non-contact communication which uses electromagnetic waves. That is, the communication (reading and writing) of the data within a semiconductor memory (IC chip) can be performed in a non-contact state. The RF-ID section normally comprises an IC chip and a coil-shaped antenna connected to the IC chip.

A transmitter-receiver 2 has a reader-writer function, and transmits and receives data to and from the transmitter-receiver section 111, provided in the IC chip of the RF-ID section (electronic circuit 11) disposed on the optical disk surface, by radio communication. The data communication between the transmitter-receiver 2 and the transmitter-receiver section 111 of the electronic circuit 11, for example, is performed at a transmission rate of 106 Kbytes/s (Kbps).

If the electronic circuit 11 (RF-ID section) receives radio waves from the transmitter-receiver 2 through the antenna (transmitter-receiver section 111), a resonance phenomenon causes an electromotive force to occur (electromagnetic induction, etc.), and this electromotive force is rectified by a power-supply rectifying section and is used as a power source for the electronic circuit 11. With this power source, the IC chip within the RF-ID section is started. It is a matter of course that the power supply is not limited to such a configuration.

An arithmetic unit 3 is, for example, a personal computer (PC) and is equipped with a read-only memory (ROM) section (storage section) 31 on which basic information such as an operating system (OS) is stored, a random access memory (RAM) section 32 as a rewritable storage section, an arithmetic processing section 33 such as a CPU, and a display 34 such as a liquid crystal display. The arithmetic unit 3 transmits and receives data to and from the disk drive 1 to perform desired signal processing.

A living body authentication device 4 is used to limit the start and operation of this system to only authorized users. Examples of living body parameters are fingerprint authentication, face authentication, voiceprint authentication, and iris authentication parameters. When starting the disk drive 1 connected to the PC (arithmetic unit) 3, a user touches, for example, a fingerprint reader for fingerprint authentication with a predetermined finger so that the fingerprint is optically read, and then the read fingerprint is compared with a previously registered user's fingerprint. Next, only when the two fingerprints match with each other, the user is authorized to use.

In the system configured as described above, in this embodiment, contents data, which should be protected, such as music, video, etc., is divided and stored as first, second, and third sets of data on the optical data storage section 12 of the optical disk, the data memory 115 of the electronic circuit 11, and on a memory 51 of a server 5. The first and second sets of data can be written at the time of shipment, or can be recorded afterwards. The writing of these data can also be performed by downloading them via a network. In this case, these data themselves can be varied according to the manner in which they are used. For instance, special characters can be added for a limited period of time during which contents data can be used.

The management memory 116 is used to store the management information of the optical disk. In this embodiment, the management memory 116 stores a unique store number code for specifying a store as a manager who manages the disk. For example, a unique store number code for specifying an optical-disk store or optical-disk rental store is stored. Using this store number code, the PC connects with a server on a network, downloads data, and performs contents management described later.

The store number code contains, for example, a store's name, a person's name in charge, an ID code for each user, and so forth. Therefore, if a server connected through a network refers to a store number code created by a PC, that server can obtain the management information of the disk and have traceability.

At the time of selling, if a store's name, a department name, a person's name in charge, and a time code are written together with a store number code, this kind of store number code will exist only one in the world. Therefore, when there is duplicate access by a user and a person in a store who have the same store number code, it is found that there is a possibility of illegal access. When access based on the same store number code is duplicated, the store number code stored on the management memory 116 of the electronic circuit 11 of the optical disk is deleted to prevent illegal access. If the store number code is deleted, the optical disk cannot be reproduced any longer. Therefore, a purchaser (user) of the legal optical disk needs to carry it to the selling store to change the store number code so that the disk can be reproduced. In this case, that person is given a premium or the like as compensation when changing the store number code.

In the case where access is duplicated with the same store number code, there is a great possibility that a purchaser of the legal optical disk will be directly or indirectly concerned in the illegal copying, and by tracing at least the store number code, a person or organization involved in illegal copying can be found.

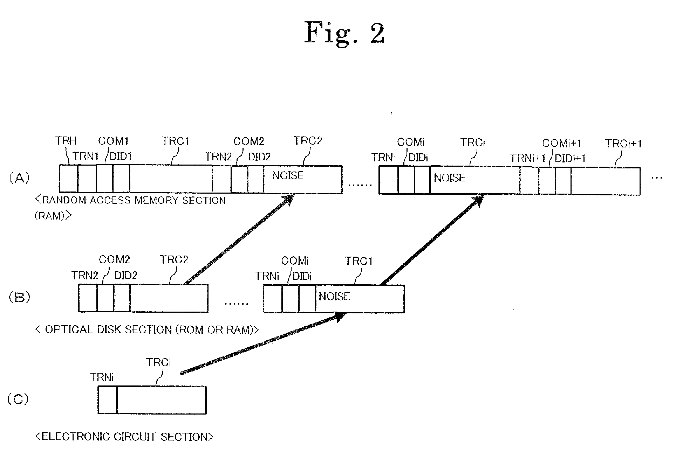

FIGS. 2A to 2C show examples of optical data formats for contents data (speech and video data). FIG. 2A shows contents data stored on a rewritable storage section (RAM). FIG. 2B shows contents data stored on the ROM or RAM of the optical disk. FIG. 2C shows contents data stored on a memory of the electronic circuit mounted on the optical disk.

In FIGS. 2A to 2C, the TRH field is a head track and indicates the entire information of the optical disk. The TRNi field is a navigation track and indicates a video chapter number, or index data in video-output order. The COMi field is a command code and indicates the data required to read data from a contents track. The DIDi field is ID information and indicates subject authentication information, and the TRCi field is a contents track and indicates video data or speech data. In this format, "i" represents a natural number.

In this example, as shown in FIG. 2A, only the video and speech of the best part of contents have been previously recorded on the optical disk section (ROM or RAM). That is, TRN2, COM2, DID2 and TRC2, ···, TRNi, COMi, and DIDi have been recorded, and NOISE (noise data) has been recorded on TRCi. On the memory of the electronic circuit of the optical disk that is limited in storage capacity and transmission speed, as shown in FIG. 2C, the speech information (TRNi and TRCi) of the contents has been recorded. In addition, the best part of the contents track TRCi is missing, and instead, video with noise data (NOISE) has been downloaded via a network and recorded on a rewritable storage section such as a hard disk drive (HDD) of the PC. That is, TRH1, TRN1, COM1, DID1, TRC1, TRC2, COM2, DID2, TRC2 (noise data), TRNi, COMi, DIDi, TRCi (noise data), TRNi+1, COMi+1, DIDi+1, and TRCi+1 have been recorded.

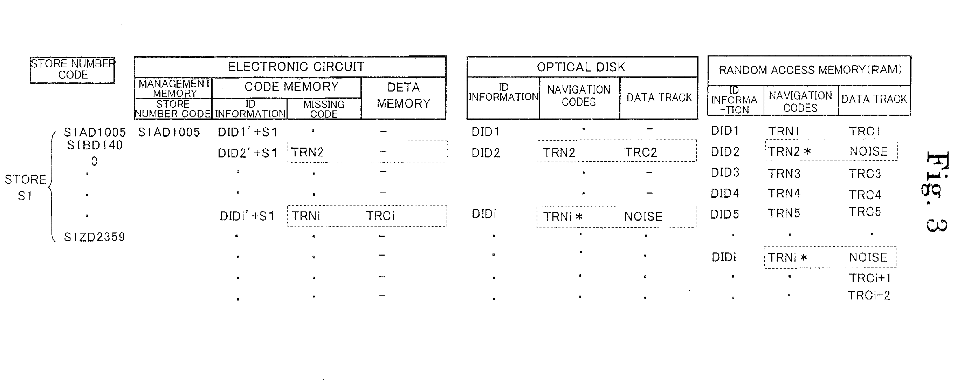

In FIGS. 2A, 2B, and 2C, corresponding data are interconnected by an arrow. In the example shown in FIG. 2, for the contents data to be downloaded via a network, as shown in FIG. 2A, noise data is recorded on the TRC2 and TRCi fields of the rewritable storage section. Also, as shown in FIG. 2B, the correct data of the noise data recorded on the TRC2 field of the writable storage section is recorded on the TRC2 field of the optical disk, and noise data corresponding to the noise data recorded on the TRCi field of the rewritable storage section is recorded on the TRCi field of the optical disk. Further, as shown in FIG. 3C, the correct data of the noise data recorded on the TRCi of the optical disk is recorded on the memory of the electronic circuit of the disk.

In FIG. 3, the above-described store number code is recorded on the management memory 116 of the electronic circuit. The complementary ID information of the optical disk, DID1'+S1, DID2'+S1, ···, and DIDi'+S1 are recorded on the code memory of the electronic circuit, and missing code TRN2 corresponding to DID2'+S 1, and missing code TRNi corresponding to DIDi'+S1 are also recorded on the code memory. Further, contents track TRCi corresponding to the missing code TRNi is recorded on the data memory of the electronic circuit.

As previously described, for the store code to be as unique as possible, in this example, the store code is assigned a store's name, a seller, and a time code (date and time). For example, sellers are represented by A, B, ···, and Z. The date in the time code is represented by a letter D, while the time is indicated in the 24-hour system. In the example of FIG. 3, as a store number code, it is assumed that there are sellers A to Z in a store S1 and sellers A, B, and Z have sold disks at 10:05, 14:00, and 11:59. From the store number code of the electronic circuit of FIG. 3 it is found that the disk was purchased at 10:05 on the day of "D" from the seller A in the store number S1.

In addition, on the optical disk, ID information (DID1, DID2, DIDi) is recorded, and navigation tracks TRN2 and TRNi, which correspond to DID2 and DIDi, are recorded and contents (data) tracks TRC2 and NOISE, which correspond to DID2 and DIDi, are recorded. Furthermore, on the rewritable storage section (RAM), navigation tracks TRN1, TRN2*,TRN3, TRN4, TRN5, ···, and TRNi*, which correspond to ID information DID1, DID2, DID3, DID4, DID5, ···, and DIDi, are recorded and contents (data) tracks TRC1, NOISE, TRC3, TRC4, TRC5, ···, and NOISE, TRCi+1, and TRCi+2 are recorded. In the above description, "*" indicates a missing track number and missing information.

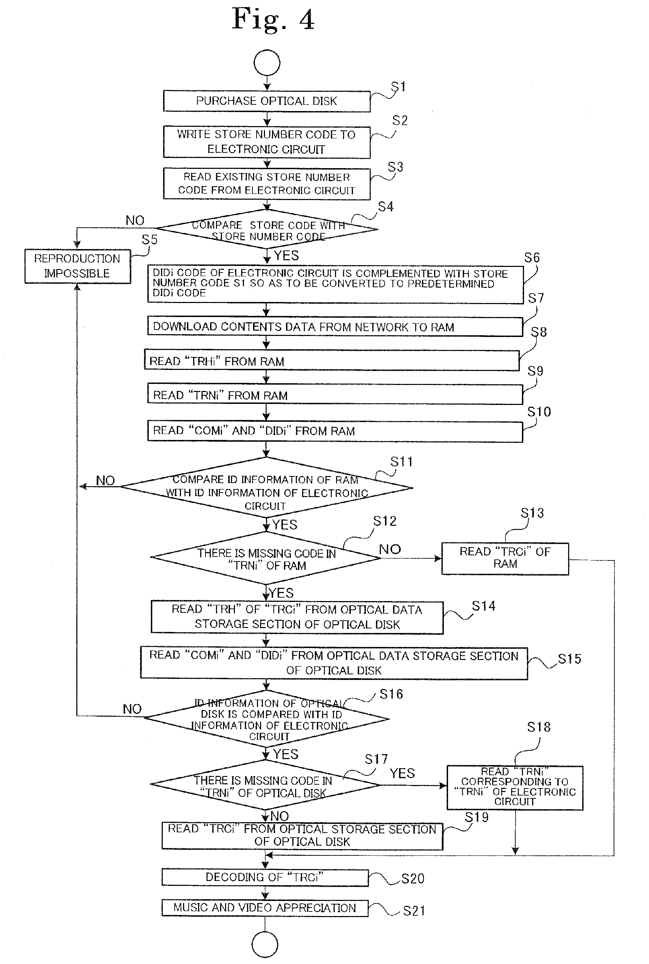

FIG. 4 shows a flowchart showing a processing procedure in this embodiment.

First, if a user purchases an optical disk at a store (step S1), the store number code is written from the PC 3 and transmitter-receiver 2 of the store through the RF-ID section and to the management memory 116 of the electronic circuit 11 (step S2). In this state, the optical disk can be used.

Now, if the user inserts the optical disk into the disk drive unit, the existing store number code is read from the management memory 116 of the electronic circuit 11 (step S3). Next, the previously input store code for the store in which the PC 3 is installed is compared with the store number code (step S4), and if both are not the same, reproduction of the optical disk is made impossible as an illegal disk (step S5).

In step S4, if both are decided to be the same, the DIDi code (ID information and subject authentication information) of the electronic circuit 11 is complemented with the store number code so as to be converted to a predetermined DIDi code, whereby the DIDi code is encoded with the store number code (step S6).

Next, contents data is downloaded from a network to the rewritable storage section (RAM) such as a HDD (step S7); the head track TRHi and navigation track TRNi are read from the rewritable storage section (RAM) (steps S8 and S9); and the command code COMi and subject authentication information code DIDi are read from the rewritable storage section (RAM) (step S10).

Thereafter, the ID information of the rewritable storage section (RAM) is compared with the ID information stored on the memory of the electronic circuit (step S11). In this comparison, it is decided whether or not the downloaded data is in a predetermined format, and when incorrect data is downloaded, reproduction of the data is made impossible.

In step S11, if the two pieces of ID information are not the same, reproduction is made impossible (step S5). If they are the same, it is decided whether or not there is a missing code in the navigation track TRNi of the rewritable storage section (RAM) (step S12). If there is no missing code, the contents track TRCi of the rewritable storage section (RAM) is read (step S13). The data of the read contents track TRCi is decoded (step S20), whereby the environment of music and video appreciation is set (step S21).

On the other hand, in step S12, if there is a missing code in the navigation track TRNi, the head track TRH or navigation track TRNi is read from the optical data storage section of the optical disk (step S14), and the command code COMi and subject authentication information code DIDi are read from the optical data storage section of the optical disk (step S 15).

Subsequently, the ID information of the optical disk is compared with the ID information of the electronic circuit to decide whether or not the optical disk is a forgery (step S16). When the two pieces of information are not the same, the optical disk is decided to be a forgery and reproduction is made impossible (step S5). In step S16, if they are decided to be the same, it is decided whether or not there is a missing code in the navigation track TRNi of the optical disk (step S17). If there is a missing code, the contents track TRCi corresponding to the navigation track TRNi of the memory of the electronic circuit is read (step S 18). The data of the read contents track TRCi is decoded (step S20), whereby the environment of music and video appreciation is set (step S21).

In step S 17, if it is decided that there is no missing code in the navigation track TRNi of the optical disk, the contents track TRCi is read from the optical data storage section of the optical disk. The data of the read contents track TRCi is decoded (step S20), whereby the environment of music and video appreciation is set (step S21).

As an application example of the present invention, a description will hereinafter be given of an on-demand video distribution service that uses broadband channels (network television, etc.). In this video distribution service, guide books (monthly magazines, etc.) with disks recording a plurality of titles each containing the best part of contents data such as a movie are distributed, and a user who purchased the guide book accesses the related Web site of the distribution source with the disk via a network, using the disk drive unit and PC, and displays the distribution service on the display unit. The user clicks an icon for contents which he or she wants to purchase, and downloads the contents from the distribution source. At this time, the disk has an IP address for the distribution source written thereto. Therefore, if the user only inserts the disk into the disk drive unit, the disk is connected to the distribution source without settings. That is, it is unnecessary for users to input the password of the distribution source, etc. Thus, the disk is able to access a target IP address directly without DNS (domain name server), as a physical passport. Because it is not necessary to input a password, etc., not only is the security high, but operation is also very easy and operability is high.

In addition, personal information (a credit card number, a bank account, an ID code, etc.) uses the electronic circuit mounted on the disk and is stored on a memory that is controlled and specified by the electronic circuit, so it cannot be easily read out by external units, and consequently, high security is assured. Further, because the above-described disk controls an external device such as a living body authentication device, the disk is able to authenticate a user reliably and prevent illegal access effectively.

As has been described hereinabove, in the present invention, contents data is divided into at least two sets of data. One set of data is stored on the disk, while the other set of data is stored on a memory provided in a server side that is connected via a network. When reproducing contents data, the two sets of data are joined together to obtain the original contents data. Therefore, hacking through a network or disk copying alone cannot obtain the original contents data. Because it becomes extremely difficult to acquire complete contents data, copyright protection can be more reliably performed.

Considering the capacity of data that are divided and stored on storage regions, for example, in the case where contents data for a few hundred titles is distributed via a network, it becomes 200 Gbytes to 400 Gbytes of contents data. When the data of the best part which completes contents data distributed via a network is divided and stored on the storage region of the optical disk and the memory of the electronic circuit, it is easy to prepare 2 Gbytes for the storage region of the optical disk and tens of Mbytes for the memory of the electronic circuit.

An applied example of the present invention will be described. For example, in the case where a provider performs on-demand video service via a broadband network, the provider distributes ROM-type disks equipped with an electronic circuit in which 50 titles each containing only the best part of contents data, for example, have been recorded, instead of distributing monthly magazines. A user can access a related Web site via the disk, click an icon for contents data which he or she wants to purchase, and purchase the contents data. (Users only need to insert the disk and do not need to input a password or the like.)

The contents data, such as music or a movie, thus purchased via a network is downloaded and then stored on a memory such as a HDD connected to a PC, etc. However, the best part of the downloaded contents data is missing and contains noise data. Therefore, to reproduce the contents data such as music, a movie, or the like, the disk is inserted into the disk drive unit to acquire the data stored on the disk storage region and the memory of the electronic circuit mounted on the disk (which corresponds to the missing data of the contents data such as the best part described above). The acquired data is joined to the data from the HDD to obtain the complete contents data, whereby music or a movie is reproduced. For example, the video and part of the speech of the best part can be recorded on the storage region of the optical disk, and the remaining part of the speech of the best part (important speech) can be recorded on the memory of the electronic circuit. Even in the case where data distribution is performed by streaming instead of downloading, the same applies.

In the case where a provider performs an on-demand video distribution service via a network, optical disks with the above-described electronic circuit in which 50 titles each containing only the best part of a movie, for example, have been recorded are distributed instead of monthly magazines. A user clicks an icon for the title which he or she wants to purchase from the icons for the movies recorded on the optical disk. The movie purchased via a network is downloaded or streamed and then stored on a memory such as a HDD, etc. However, in the downloaded data, the best part is missing, and instead, noise data has been embedded. To reproduce the movie, the optical disk is inserted and an icon for the video (in which the best part has been embedded) is clicked and then jointed to the data from the memory such as a HDD, whereby a complete movie is reproduced.

Thus, assuming that the video and part of the speech of the best part are recorded on the optical disk and that the remaining part of the speech of the best part (important speech) is recorded on the memory of the electronic circuit, illegal copying becomes even more difficult.

The disk is able to access a target IP address directly without a domain name server, as a physical pass port. (Because inputting of a password or the like is not necessary, security is high and manipulation is very simple.)

Because personal information (a credit card number, a bank account, an ID code, etc.) is stored on the disk equipped with the above-described electronic circuit, it is protected with high security.

If the above-described external device such as a living body authentication device is constructed that it controls itself by the above-described electronic circuit of the disk, more reliable user authentication is made possible, whereby the prevention of illegal access can also be more effectively performed.

In the foregoing description, contents data is received from a server via a broadband network, but in the case where both a customer and a store have no broadband environment, a disk store prepares a HDD or DVD (business original disk) for contents management. In this case, contents data containing a missing part may be recorded on the HDD, DVD, or the like, not a server on a Web site, and a customer's DVD may be sold by adding a management code and copying.

The configurations and operations of the preferred embodiments of contents management method and contents distribution method according to the present invention have been described in detail. However, such embodiments are mere examples of the present invention, and are not to limit the present invention. It would be obvious to those skilled in this art that within the scope of the present invention, many modifications and variations are possible according to specified uses.

## Claims

1. A contents management method comprising the steps of:
preparing contents data constituted of at least two sets of data;
storing one of said two sets of data on a disk and storing the other of said two set of data on a memory provided in a server side that is connected via a network; and
when reproducing said disk, reproducing said contents data by acquiring said at least two sets of data.

2. The contents management method as set forth in claim 1, wherein, when reproducing said disk, by accessing said server side based on information stored on said disk and reading out said other set of data, said contents data is reproduced.

3. A contents management method comprising the steps of:
preparing contents data constituted of at least first, second, and third sets of data;
storing said first set of data on a disk, storing said second set of data on a memory of an electronic circuit mounted on said disk, and storing said third set of data on a memory provided in a server side that is connected via a network; and
when reproducing said disk, reproducing said contents data by acquiring said second set of data and said third sets of data.

4. The contents management method as set forth in claim 3, wherein, when reproducing said disk, by reading out said second set of data stored on the memory of the electronic circuit mounted on said disk, and by accessing said server side based on information stored on said disk and reading out said third set of data, said contents data is reproduced.

5. The contents management method as set forth in claim 3 or 4, wherein the data stored on said server side is scrambled.

6. The contents management method as set forth in any of claims 1 through 5, wherein
the memory of said electronic circuit stores a code for specifying a particular user or store that handles said disk;
when reproducing said disk, the code stored on said memory is compared with a code previously set at a reproducing side; and
only when both codes are the same, reproduction is made possible.

7. The contents management method as set forth in any of claims 1 through 6, wherein
ID information stored on said disk is compared with ID information stored on said electronic circuit; and
only when both are the same, reproduction of said disk is made possible.

8. The contents management method as set forth in any of claims 1 through 7, wherein
ID information previously given to said third set of data is compared with ID information stored on said electronic circuit; and
only when both are the same, reproduction of said disk is made possible.

9. The contents management method as set forth in any of claims 1 through 8, wherein
at the time of said reproduction, a disk reproducing side is connected to a server through a network; and
said server side manages said code received from said disk reproducing side.

10. The contents management method as set forth in claim 9, wherein, when said code is duplicated, said code stored on the memory of the electronic circuit of said disk is deleted.

11. The contents management method as set forth in any of claims 1 through 10, wherein data of the part of said third set of data that corresponds to at least either said first set of data or said second set of data is recorded as noise data.

12. The contents management method as set forth in any of claims 1 through 11, wherein said electronic circuit comprises a radio frequency identification (RF-ID) section.

13. The contents management method as set forth in any of claims 1 through 12, wherein said disk reproducing side is provided with an authentication device which only particular users can use.

14. The contents management method as set forth in any of claims 1 through 13, wherein said authentication device comprises a living body authentication device.

15. The contents management method as set forth in any of claims 1 through 14, wherein said disk comprises an optical disk.

16. A contents distribution method based on an on-demand video distribution service, comprising the steps of:
dividing contents data into at least two sets of data;
storing one of said two sets of data on a disk and storing the other of said two sets of data on a memory provided in a server side that is connected via a network;
when reproducing said contents, reading out said one set of data from said disk and receiving distribution of said other set of data from the memory provided in said server side; and
reproducing said contents data based on said two sets of data obtained.

17. A contents distribution method based on an on-demand video distribution service, comprising the steps of:
dividing contents data into first, second, and third sets of data;
storing said first set of data on a disk, storing said second set of data an electronic circuit mounted on said disk, and storing said third set of data on a memory provided in a server side that is connected via a network;
when reproducing said contents, reading out said first and second sets of data from said disk and receiving distribution of said third set of data from the memory provided in said server side; and
reproducing said contents data based on said first, second, and third sets of data.

18. The contents distribution method as set forth in claim 16 or 17, wherein
said disk stores a plurality of titles each containing only the best part of said contents data previously determined; and
at the time of reproduction, a preset Web site is accessed with said disk to receive distribution of corresponding contents data.

19. The contents distribution method as set forth in claim 17 or 18, wherein said first and second sets of data are assigned predetermined particular data of said contents data.

20. The contents distribution method as set forth in claim 16, wherein data of the part of said other set of data that corresponds to said one set of data is noise data.

21. The contents distribution method as set forth in any of claims 17 through 19, wherein data of the part of said third set of data that corresponds to at least either said first set of data or said second set of data is noise data.

22. A contents distribution method of distributing contents data from a provider via a network, comprising the steps of :
dividing said contents data into at least two sets of data;
storing one of said two sets of data on a disk and storing the other of said two sets of data on a memory provided in a server side that is connected via a network; and
when reproducing said disk, joining said one set of data to said other set of data acquired via said network to reproduce said contents data.

23. A contents distribution method of distributing contents data from a provider via a network, comprising the steps of:
dividing said contents data into at least three sets of data;
storing said first set of data on a disk, storing said second set of data on an electronic circuit mounted on said disk, and storing said third set of data on a memory provided in a server side that is connected via a network; and
when reproducing said disk, acquiring said first and second sets of data, and joining said first and second sets of data to said third set of data acquired via said network to reproduce said contents data.

24. The contents distribution method as set forth in claim 22, wherein said one set of data contains data equivalent to the predetermined best part of said content data.

25. The contents distribution method as set forth in claim 23, wherein said one set of data contains data equivalent to the predetermined best part of said content data.

26. The contents distribution method as set forth in any of claims 22 through 25, wherein, based on an address of a distribution source stored on said disk, said disk is connected to said distribution source via a network so that said other set of data or said third set of data is downloaded.

27. The contents distribution method as set forth in any of claims 16 through 26, wherein said disk comprises an optical disk
